# EUROPEAN PATENT SPECIFICATION

(11) **EP 1 727 658 B1**
(45) Date of publication and mention of the grant of the patent: **22.10.2014**
(21) Application number: 05705934.7
(22) Date of filing: 21.01.2005
(51) Int. Cl.: B29C 45/00, B29C 49/06, B29C 49/64, B29C 44/08, B29C 45/17, B29K 105/00, B29L 31/00, B29K 105/04, B29C 49/22, B65D 1/02

(54) **PROCESS FOR PREPARING A CONTAINER HAVING A FOAMED WALL**
VERFAHREN ZUM HERSTELLEN EINES BEHÄLTERS MIT EINER AUFGESCHÄUMTEN WAND
PROCEDE DE PRODUCTION D'UN RECIPIENT COMPRENANT UNE PAROI EN MOUSSE

(30) Priority: 17.02.2004 US 545049 P; 17.12.2004 US 15360
(43) Date of publication of application: 06.12.2006
(73) Proprietor: Plastic Technologies, Inc., Holland, OH 43528-0964 (US)
(72) Inventor: SEMERSKY, Frank, E., Holland, OH 43528 (US); VOYLES, William, D., Toledo, OH 43623 (US); SADZEWICZ, Eugene, M., Toledo, OH 43606 (US)
(74) Representative: Barton, Russell Glen
(86) International application number: PCT/US2005/001774
(87) International publication number: WO 2005/081756

(56) References cited:
- US-A- 5 223 545
- US-A1- 2001 047 042
- US-A1- 2002 172 739
- US-A1- 2004 012 107
- US-B1- 6 358 446
- DATABASE WPI Week 198617, Derwent Publications Ltd., London, GB; AN 1986-110207, XP002539114 & JP 61 053021 A (MITSUBISHI GAS CHEM CO INC) 15 March 1986

## Description

### FIELD OF THE INVENTION

The present invention relates generally to a process for preparing a polymer container having a foamed wall. More particularly, the invention is directed to a process for preparing a container consisting essentially of microcellular foam, wherein the foam microcells contain a non-reactive gas such as carbon dioxide.

### BACKGROUND OF THE INVENTION

Biaxially oriented single and multi-layered bottles may be manufactured from polymer materials such as, for example, polyethylene terephthalate (PET) using a hot preform process, wherein a single or multi-layered preform is heated to its desired orientation temperature and drawn and blown into conformity with a surrounding mold cavity. The preform may be prepared by any conventional process such as, for example, by extruding a preform comprising single or multiple layers of polymer, or by injecting subsequent layers of polymer over a previously injection molded preform. Generally, multiple layers are used for beverage containers, to add diffusion barrier properties not generally found in single layer containers. Examples of prior art are US2002172739 A1 and US 20010047042 A1.

The various layers of polymers in the prior art multi-layered containers are generally in intimate contact with one another, thereby facilitating the conduct of thermal energy through the walls of the containers. This allows the chilled contents of the container to quickly warm to the ambient temperature. Accordingly, such containers are often sheathed in, for example, a foamed polystyrene shell to impart thermal insulating properties to the container.

It would be desirable to prepare an improved container having both carbon dioxide diffusion barrier properties and thermal insulating properties.

JP 61053021 (Senzo) discloses a method of manufacturing a foamed container, to obtain a foamed container high in mechanical strength, heat insulating property, and rigidity wherein the tap section is substantially unfoamed, and is excellent in strength and dimensional accuracy and the thin-walled section is orientated at least in one direction, by heating an unfoamed parison except the plug section thereof to cause to foam, and stretching, and blow molding the parison while the heated part is still softened.

### SUMMARY OF THE INTENTION

Accordant with the present invention, a process according to claim 1 for making a container exhibiting the properties set forth above has surprisingly been discovered.

Also contemplated is a container, consisting essentially of a microcellular foamed polymer, and a non-reactive gas contained within the microcellular foam cells.

The container produced according to the process of the present invention is particularly useful for packaging carbonated beverages.

### DETAILED DESCRIPTION OF THE PREFERRED EMBODIMENT

The present invention is directed to a process according to claim 1.

Suitable polymers from which the container may be prepared include, but are not necessarily limited to, polyethylene terephthalate (PET) and other polyesters, polypropylene, acrylonitrile acid esters, vinyl chlorides, polyolefins, poly amides, and the like, as well as derivatives, blends, and copolymers thereof. A preferred polymer is PET.

Polymer flakes are melted in a conventional plasticizing screw extruder, to prepare a homogeneous stream of hot polymer melt at the extruder discharge. Typically, the temperature of the polymer melt stream discharged from the extruder ranges from about 225 degrees Centigrade to about 325 degrees Centigrade. One ordinarily skilled in the art will appreciate that the temperature of the polymer melt stream will be determined by several factors, including the kind of polymer flakes used, the energy supplied to the extruder screw, etc. As an example, PET is conventionally extruded at a temperature from about 260 degrees Centigrade to about 290 degrees Centigrade. A non-reactive gas is injected under pressure into the extruder mixing zone, to ultimately cause the entrapment of the gas as microcellular voids within the polymer material. By the term "non-reactive gas" as it is used herein is meant a gas that is substantially inert vis-à-vis the polymer. Preferred non-reactive gases comprise carbon dioxide, nitrogen, and argon, as well as mixtures of these gases with each other or with other gasses.

According to the present invention, the extrudate is injection molded to form a polymer preform having the non-reactive gas entrapped within the walls thereof. Methods and apparatus for injection molding a polymer preform are well-known in the art.

It is well-known that the density of amorphous PET is 1.335 grams per cubic centimeter. It is also known that the density of PET in the melt phase is about 1.200 grams per cubic centimeter. Thus, if the preform injection cavity is filled completely with molten PET and allowed to cool, the resulting preform would not exhibit the proper weight and would have many serious deficiencies, such as sink marks. The prior art injection molding literature teaches that, in order to offset the difference in the densities of amorphous and molten PET, a small amount of polymer material must be added to the part after the cavity has been filled and as the material is cooling. This is called the packing pressure. Thus, about ten per cent more material must be added during the packing pressure phase of the injection molding cycle in order to insure that a preform made by injection molding is filled adequately and fully formed. The packing pressure phase of the injection molding operation is likewise used for polymer materials other than PET.

According to the present invention however, the polymer preform is injection molded and simultaneously foamed using a non-reactive gas. The gas is entrained in the material during the injection phase. Contrary to the prior art injection molding process, wherein additional polymer material is injected during the packing phase, the present invention utilizes minimal packing pressure. As the polymer material is still in a molten state, the partial pressure of the non-reactive gas is sufficient to permit the release of the dissolved gas from the polymer into the gas phase where it forms the microcellular foam structure. Thus, the preform made by the inventive process weighs less than, but has the same form and geometry as, the polymer preforms produced by the conventional injection molding operations that employ the packing process.

Upon completion of the injection molding step, the preform is cooled to a temperature below the polymer softening temperature. For example, the softening temperature for PET is approximately 70 degrees Centigrade. Thus, the entrapped non-reactive gas is retained within the walls of the polymer preform. This cooling step is critical to the inventive process, as it conditions the polymer and preserves its desirable properties for the successful preparation of a blow molded container. This cooling step is also necessary when employing polymers such as polyesters, which cannot be blow molded directly from an extruded parison. This cooling step may be effected by any conventional process used in the polymer forming art such as, for example, by passing a stream of a cooling gas over the surfaces of the preform, or cooling the preform while in-mold by cooling the forming mold.

The preform is thereafter reheated to a temperature above the polymer softening temperature. This heating step may be effected by well-known means such as, for example, by exposure of the preform to a hot gas stream, by flame impingement, by exposure to infra-red energy, by passing the preform through a conventional oven, or the like. PET is generally reheated to a temperature twenty to twenty-five degrees above its softening temperature for the subsequent blow molding operation. If PET is reheated too far above its glass transition temperature, or held at a temperature above its softening temperature for an excessive period of time, the PET undesirably will begin to crystallize and turn white. Likewise, if the preform is heated to a temperature above which the mechanical properties of the material are exceeded by the increasing pressure of the non-reactive gas in the microcells, the microcells undesirably will begin to expand thus distorting the preform.

Finally, the preform is blow molded, to prepare a container, consisting essentially of a microcellular foamed polymer having a non-reactive gas contained within the microcellular foam cells. Methods and apparatus for blow molding a container from a polymer preform are well-known.

In addition to the preferred gases, the microcells may contain other gases typically used in processes for making microcellular foam structures. Preferably, the non-reactive gas comprises carbon dioxide in a concentration of at least ten percent by weight of the total weight of the non-reactive gas. This level of carbon dioxide concentration provides adequate partial pressure to retard the diffusion of carbon dioxide from a carbonated beverage within the inventive container to the exterior atmosphere. Moreover, the microcellular foam acts as an effective thermal insulator, to retard the conduct of heat energy from the atmosphere to the chilled carbonated beverage within the container.

### Comparison

A conventional preform is made using KoSa 2201 PET resin, according to standard procedures. The packing pressure is about 375 bar for about 11.0 seconds. Cooling time is approximately 15.0 seconds as measured on the Arburg 420C. The preform weighs about 24.1 grams. After cooling, the preform is reheated and blow molded into an acceptable bottle on a Sidel SB02/3 blow-molding machine. The maximum temperature of the surface of the preform (as measured by the infrared pyrometer supplied with the Sidel SB02/3) which can be achieved before the preform crystallizes to an unacceptable level is about 115 degrees C.

### Example

A preform is made according to the present invention with the same resin, with the introduction of supercritical, non-reactive, nitrogen gas. Holding pressure is reduced to about 308 bar and held for only about 0.5 second. Cooling time is increased to approximately 25.0 seconds. The preform is aesthetically acceptable, and does not exhibit any physical deficiencies. The preform weighs about 21.85 grams. The preform is reheated on the identical blow molding machine, and the maximum temperature at which the preform can be blow molded without distortion in the blow molding heating system prior to reaching the blow mold is about 104 degrees C as measured at the same location on the preform.

From the forgoing description, one ordinarily skilled in the art can easily ascertain the essential characteristics of the invention, and without departing from its scope as defined by the attached claims, can make various changes and modifications to adapt the invention to various uses and conditions.

## Claims

1. A process for preparing a container having a foamed wall, comprising the steps of:
simultaneously injection molding and foaming a foamed polymer preform having a non-reactive gas entrapped within the walls thereof from a polymer melt having the non-reactive gas entrained therein in a first mold;
cooling the preform to a temperature below the polymer softening temperature;
reheating the preform to a temperature greater than the polymer softening temperature; and
blow molding the preform, to prepare a container consisting essentially of a microcellular foamed polymer having a non-reactive gas contained within the microcellular foam cells.

2. The process for preparing a container having foamed walls according to Claim 1, wherein the polymer comprises polyethylene terephthalate.

3. The process for preparing a container having foamed walls according to any preceding Claim , wherein the non-reactive gas comprises carbon dioxide, nitrogen, argon, or a mixture thereof.

4. A process for preparing a container having a foamed wall, according to claim 3 when dependent on claim 2 comprising the steps of cooling the preform to a temperature below about 70 degrees Centigrade and reheating the preform to a temperature above about 70 degrees Centigrade.

5. The process according to any preceding Claim, wherein the polymer comprises a polymer selected from polyesters, polypropylene, acrylonitrile acid esters, vinyl chlorides, polyolefins, polyamides, and derivatives, blends, and copolymers thereof.

6. The process according to Claim 5, wherein the polymer comprises polyethylene terephthalate.

7. The process according to Claim 5 or 6, wherein the non-reactive gas comprises carbon dioxide, nitrogen, argon, or a mixture thereof.

8. The process according to any preceding Claim, wherein the non-reactive gas comprises carbon dioxide.

9. The process according to any preceding Claim, wherein the non-reactive gas comprises carbon dioxide at a concentration of at least 10% by weight.

10. The process for preparing a container having foamed walls according to Claim 1, wherein the non-reactive gas is a supercritical nitrogen gas.

11. The process for preparing a container having foamed walls according to Claim 1, wherein a partial pressure of the non-reactive gas in the polymer melt is sufficient to facilitate the release of the non-reactive gas from the polymer melt into the gas phase to foam the polymer melt.

## Patentansprüche

1. Verfahren zum Herstellen eines Behälters, der eine geschäumte Wand hat, mit den Schritten:
Simultanes Spritzgießen und Schäumen eines geschäumten Polymer-Vorformlings, der ein nicht-reaktives Gas in seinen Wänden eingeschlossen hat, aus einer Polymerschmelze, bei der das nicht-reaktive Gas in einer ersten Form mitgerissen wird;
Abkühlen des Vorformlings auf eine unter der Polymererweichungstemperatur liegenden Temperatur;
Wiedererhitzen des Vorformlings auf eine Temperatur, die größer als die Polymererweichungstemperatur ist; und
Blasformen des Vorformlings, um einen Behälter herzustellen, der im Wesentlichen aus einem mikrozellularen geschäumten Polymer besteht, bei dem ein nicht-reaktives Gas in den mikrozellularen Schaumzellen enthalten ist.

2. Verfahren zum Herstellen eines Behälters, der geschäumte Wände hat, gemäß Anspruch 1, bei dem das Polymer Polyethylenterephthalat aufweist.

3. Verfahren zum Herstellen eines Behälters, der geschäumte Wände hat, gemäß irgendeinem vorhergehenden Anspruch, bei dem das nicht-reaktive Gas Kohlendioxid, Stickstoff, Argon oder eine Mischung daraus aufweist.

4. Verfahren zum Herstellen eines Behälters, der eine geschäumte Wand hat, gemäß Anspruch 3, wenn abhängig von Anspruch 2, mit den Schritten:
Abkühlen des Vorformlings auf eine Temperatur, die unter ungefähr 70 °C liegt, und Wiedererhitzen des Vorformlings auf eine Temperatur über ungefähr 70 °C.

5. Verfahren nach irgendeinem vorhergehenden Anspruch, bei dem das Polymer ein Polymer umfasst, das ausgewählt ist aus Polyestern, Polypropylen, Acryl, Nitril, Säureestern, Vinylchloriden, Polyolefinen, Polyamiden und deren Derivaten, Mischungen und Kopolymeren.

6. Verfahren nach Anspruch 5, bei dem das Polymer Polyethylenterephthalat umfasst.

7. Verfahren nach Anspruch 5 oder 6, bei dem das nicht-reaktive Gas Kohlendioxid, Stickstoff, Argon oder eine Mischung daraus umfasst.

8. Verfahren nach irgendeinem vorhergehenden Anspruch, bei dem das nicht-reaktive Gas Kohlendioxid umfasst.

9. Verfahren nach irgendeinem vorhergehenden Anspruch, bei dem das nicht-reaktive Gas Kohlendioxid mit einer Konzentration von mindestens 10 Gew.-% umfasst.

10. Verfahren zum Herstellen eines Behälters, der geschäumte Wände hat, gemäß Anspruch 1, bei dem das nicht-reaktive Gas ein überkritisches Stickstoffgas ist.

11. Verfahren zum Herstellen eines Behälters, der geschäumte Wände hat, gemäß Anspruch 1, bei dem ein partieller Druck des nicht-reaktiven Gases in der Polymerschmelze ausreichend ist, um die Freigabe des nicht-reaktiven Gases aus der Polymerschmelze in die Gasphase zu erleichtern, um die Polymerschmelze aufzuschäumen.

## Revendications

1. Procédé de production d'un récipient comprenant une paroi en mousse, comprenant les étapes suivantes :
• moulage par injection et moussage simultané d'une préforme de polymère en mousse comprenant un gaz inerte piégé dans les parois de celle-ci à partir d'un polymère fondu qui présente le gaz inerte entraîné dans celui-ci dans un premier moule ;
• refroidissement de la préforme à une température inférieure à la température de ramollissement du polymère ;
• réchauffage de la préforme à une température supérieure à la température de ramollissement du polymère ; et
• moulage par soufflage de la préforme afin de produire un récipient essentiellement constitué d'un polymère en mousse microcellulaire comprenant un gaz inerte piégé dans les cellules de la mousse micro cellulaire.

2. Procédé de production d'un récipient comprenant des parois en mousse selon la revendication 1, dans lequel le polymère comprend du polyéthylène téréphtalate.

3. Procédé de production d'un récipient comprenant des parois en mousse selon l'une quelconque des revendications précédentes, dans lequel le gaz inerte comprend du dioxyde de carbone, de l'azote, de l'argon ou un mélange de ceux-ci.

4. Procédé de production d'un récipient comprenant une paroi en mousse selon la revendication 3 lorsqu'elle dépend de la revendication 2, comprenant les étapes de refroidissement de la préforme à une température inférieure à environ 70 degrés centigrades, et de réchauffage de la préforme à une température supérieure à environ 70 degrés centigrades.

5. Procédé selon l'une quelconque des revendications précédentes, dans lequel le polymère comprend un polymère choisi parmi les polyesters, le polypropylène, les esters d'acide acrylonitrile, les chlorures de vinyle, les polyoléfines, les polyamides ainsi que les dérivés, les mélanges et les copolymères de ceux-ci.

6. Procédé selon la revendication 5, dans lequel le polymère comprend du polyéthylène téréphtalate.

7. Procédé selon la revendication 5 ou 6, dans lequel le gaz inerte comprend du dioxyde de carbone, de l'azote, de l'argon ou un mélange de ceux-ci.

8. Procédé selon l'une quelconque des revendications précédentes, dans lequel le gaz réactif comprend du dioxyde de carbone.

9. Procédé selon l'une quelconque des revendications précédentes, dans lequel le gaz inerte comprend du dioxyde de carbone à une concentration d'au moins 10 % en poids.

10. Procédé de production d'un récipient comprenant des parois en mousse selon la revendication 1, dans lequel le gaz inerte est un gaz d'azote supercritique.

11. Procédé de production d'un récipient comprenant des parois en mousse selon la revendication 1, dans lequel une pression partielle du gaz inerte dans le polymère fondu est suffisante pour faciliter la libération du gaz inerte à partir du polymère fondu dans la phase gazeuse afin de faire mousser le polymère fondu.
